# EUROPÄISCHE PATENTSCHRIFT

(11) **EP 0 379 097 B1**
(45) Veröffentlichungstag und Bekanntmachung des Hinweises auf die Patenterteilung: **12.05.1993**
(21) Anmeldenummer: 90100657.7
(22) Anmeldetag: 13.01.1990
(51) Int. Cl.: G01B 11/04, G01D 5/34, G01B 11/02

(54) **Verfahren zur Kantenlagenfeststellung und fotoelektronische Fühleinrichtung zur Kantenabtastung**
Process for determining the position of the rim of an object, photo-electronic sensing device to trace the rim
Procédé pour déterminer la position d'un bord et capteur photoélectrique pour cette détermination

(30) Priorität: 14.01.1989 DE 3900928
(43) Veröffentlichungstag der Anmeldung: 25.07.1990
(73) Patentinhaber: Erhardt & Leimer GmbH, D-86136 Augsburg (DE)
(72) Erfinder: Brunner, Gerhard, Dipl.-Ing. (FH), D-8900 Augsburg (DE)
(74) Vertreter: Sasse, Volker, Dipl.-Ing.

(56) Entgegenhaltungen:
- DE-A- 2 012 403
- DE-A- 3 423 308
- US-A- 3 327 125
- PATENT ABSTRACTS OF JAPAN vol. 8, no. 214 (P-304) 29 September 1984, & JP-A-59 097123 (IIYAMA KOSHINA:KK) 04 Juni 1984,

## Beschreibung

Die Erfindung betrifft ein Verfahren zur Lagefeststellung wenigstens einer Warenbahnkante gemäß Oberbegriff von Patentanspruch 1 sowie eine fotoelektronische Fühleinrichtung zur Durchführung dieses Verfahrens gemäß Oberbegriff von patent Anspruch 10.

Bei einem aus DE-A-2 012 403 bekannten Verfahren dieser Art werden über den Meßbereich zeitlich aufeinanderfolgende und räumlich nebeneinanderliegende, kurzzeitige Lichtimpulse auf eine Reihe von empfangenden Fotodetektoren gerichtet. Die in den Meßbereich eingreifende Bahn blendet einen bestimmten Teil dieser Lichtpulse ab. Die Anzahl der Lichtpulse im verbleibenden Teil wird registriert und gezählt. Die Anzahl der registrierten Lichtpulse bzw. Signale wird summarisch ausgewertet und repräsentiert die Lage der Bahnkante. Die zum Durchführen des Verfahrens geeignete Vorrichtung enthält eine sich über den Meßbereich erstreckende Walze mit zum Meßbereich paralleler Drehachse. In der Walze sind die Achse der Walze schneidende, spiralförmig angeordnete und zueinander versetzte Durchbohrungen vorgesehen. Die Walze ist an der der Lichtquelle zugewandten Seite durch perforierte Gehäuseplatten abgedeckt, in denen die Perforationen mit dem Raster der Durchbohrungen der Walze aufeinander ausgerichtet sind. Vor der an der anderen Bahnseite angeordneten Empfängergruppe ist ebenfalls eine perforierte Abdeckung vorgesehen, deren Perforationen auf die Perforationen der Gehäuseplatten ausgerichtet sind.

Bei weiteren Verfahren dieser Art (DE-PS 3 423 308) werden von einer Reihe entlang des Meßbereichs an einem oder mehreren lichtsammelnden Körpern angeordneten Fotoelementen einige aktiviert, während andere passiv bleiben. Durch Abfragen der von den Fotoelementen erzeugten Signale läßt sich die Lage der Hell/Dunkelgrenze und damit die Warenbahnkante ermitteln. Das Abfragen und Verarbeiten der Signale der Fotoelemente bedingt selbst bei einem digitalen Abtastmodus einen hohen Steuerungsaufwand. Die Genauigkeit der Kantenlagenbestimmung läßt insbesondere bei schnellaufenden Warenbahnen mit starken Verlaufsbewegungen zu wünschen übrig. Außerdem ist die Lagebestimmung über größere Breiten kostenaufwendig.

Der Erfindung liegt die Aufgabe zugrunde, ein Verfahren der eingangs genannten Art sowie eine fotoelektrische Fühleinrichtung zum Durchführen des Verfahrens zu schaffen, mit denen die Fühl- oder Meßgenauigkeit gesteigert und eine einfache Einstellung auf verschiedene gefahrene Warenbahnbreiten erreicht werden.

Die gestellte Aufgabe wird erfindungsgemäß mit den Merkmalen gemäß dem kennzeichnenden Teil des Patentanspruchs 1 bzw. des Patentanspruchs 10 gelöst.

Das Grundprinzip dieses Verfahrens ist es, zwischen wenigstens einem Lichtstrahl und dem Empfänger eine in Meßrichtung verlaufende Relativbewegung zu erzeugen, mit dem Lichtstrahl das die Hell/Dunkelgrenze repräsentierende Signal zu erzeugen, und mittels der Position des den Lichtstrahl durchlassenden Flächenbereiches der linearen Anordnung non Flüssigkristall-Lichtmodulatoren die Position der Warenbahnkante zum Signalzeitpunkt zu ermitteln. Es wird mit anderen Worten nicht die Lage der Hell/Dunkelgrenze am Empfängerteil festgestellt, sondern die Lage der Warenbahnkante mittelbar durch die Position des lichtdurchlässigen Flächenbereichs zum Signalzeitpunkt festgestellt. Da die Lage des lichtdurchlässigen Flächenbereichs der linearen Anordnung non Flüssigkristall-Lichtmodulatoren aufgrund deren Ansteuerung während der Bewegung und somit auch zum Signalzeitpunkt bekannt ist, lassen sich die Signale des Fotoelements und der Position des Flächenbereichs einfach und präzis verknüpfen. Sofern die Bewegung des Flächenbereichs zyklisch erfolgt, werden aufeinanderfolgend die Kantenlage bzw. Verlaufbewegungen der Kante exakt ermittelt, wobei deutlich unterscheidbare Signale auftreten, die für die Warenbahnlaufregelung sehr brauchbar sind. Es ergibt sich eine hohe Genauigkeit der Abtastung, da die Auflösung des Meßbereiches sehr hoch sein kann. Die hohe Genauigkeit der Abtastung ist vor allem bei hohen Bahnlaufgeschwindigkeiten wünschenswert. Ein digitaler Abtastmodus läßt sich genauso verwenden, wie ein analoger, wobei der digitale Abtastmodus den anwendungstechnischen Vorteil der Unempfindlichkeit gegen Lichtschwankungen, z.B. durch Nachlassen der Helligkeit der Lichtquelle oder Verschmutzen der Optik, hat, weil jeweils nur eine minimale Signalschwellenspannung weiterverarbeitet wird. Der analoge Abtastmodus hat hingegen den Vorteil eines verringerten elektronischen Aufwandes und ist schneller und genauer. Die beiden Abtastmöglichkeiten können auch wahlweise miteinander kombiniert sein. Beim digitalen Abtastmodus sind die Meßdaten mittels Prozessortechnik nahezu unbegrenzt weiterverarbeitbar. Bei beiden Verfahrensvarianten sind außerordentlich große Meßbereiche (Breitbandabtastung) möglich, und eine einfache Einstellung des jeweiligen Meßbereiches. Ferner kann der Meßbereich zyklisch hin und her verschoben werden, um den Warenbahnlauf changierend zu regeln, so wie es für bestimmte Aufwickelprozesse zweckmäßig ist. Auch Bahnverlagerungen lassen sich problemlos vornehmen, weil die Flüssigkristall-Lichtmodulatoren als dominierendes aktives Element des Verfahrens ansteuerseitig eine Vielzahl non für dieses Verfahren besonders brauchbare Möglichkeiten schafft.

Für die Genauigkeit der Abtastung ist die Verfahrensvariante gemäß Anspruch 2 zweckmäßig. Mit dem durchlaufenden Flächenbereich der Anordnung non Flüssigkristall-Lichtmodulatoren wird bei hoher Taktgeschwindigkeit die Kante exakt abgebildet, denn eine hohe Taktfrequenz erlaubt viele Meßläufe an der Warenbahnkante, so daß sich Korrektursignale für eine Warenbahnführvorrichtung bei einem Verlauf der Kante über die Toleranzgrenzen hinaus gezielt erzeugen und bei Wirksamwerden der Korrektur wiederum über die Kantenabtastung allmählich reduzieren lassen.

Sehr vorteilhaft ist dabei die Vorgangsweise gemäß Anspruch 3, weil durch die schrittweise elektronische Aktivierung der Flächenbereiche eine Art durchlaufende Blendenöffnung entsteht, die den Lichtstrahl für den Empfänger über den Meßbereich bewegt.

In der Regel wird der Flächenbereich in einer Richtung in taktweisen Durchläufen gemäß Anspruch 4 bewegt, und zwar mit sehr hoher Geschwindigkeit und hoher Taktfrequenz, wie es für Flüssigkristall-Anzeigen steuerungsseitig einfach zu realisieren ist. Da zu jeder Zeit die Position des aktivierten Flächenbereiches über die Ansteuerung der Flüssigkristall-Anzeige als elektronisch nutzbares Signal vorliegt, läßt sich dieses Signal sehr einfach und praktisch verzögerungsfrei mit dem Signal des oder der Fotoelemente verknüpfen.

Wichtig ist ferner die Maßnahme von Anspruch 5, weil durch einen begrenzten Meßbereich eine hohe Taktfrequenz und eine genaue Abtastung der Kantenverlaufsbewegungen möglich sind. Ansich ist der Fühlbereich, über den abgetastet werden kann, nicht begrenzt. Jedoch ist mit der Begrenzung des Meßbereichs, die zweckmäßigerweise erst nach Abschluß der Anlaufphase vorgenommen wird, sichergestellt, daß nur genau in diesem Bereich abgetastet wird, in dem die Warenbahnkante verlaufen kann, und daß dann für diesen Meßbereich genaue und starke Signale vorliegen. Die Anpassung an unterschiedliche Kantenlagen ist genauso möglich, wie die Anpassung an unterschiedliche Bahnbreiten oder Bahnlaufgeschwindigkeiten.

Auch läßt sich durch eine zyklische Verschiebung des Meßbereiches ein Changieren der Warenbahn einstellen und während des Changierens die ordnungsgemäße Bahnkantenlage ermitteln und steuern, so wie dies beispielsweise anhand von Anspruch 6 erläutert ist.

Recht vorteilhaft wird dabei so vorgegangen, wie dies Anspruch 7 erläutert. In der Anlaufphase spielt es keine nennenswerte Rolle, daß die Taktfrequenz der Abtastung auf die Länge der durchpassierenden Warenbahn geringer ist, weil zunächst die Kante aufgesucht und erst dann eine Sollage der Kante eingestellt wird. Dadurch, daß dann der Meßbereich um die Sollage eingeengt wird, wird bei hoher Taktfrequenz die durchpassierende Warenbahnlänge öfter abgetastet und es ergeben sich schnellere Meßzyklen.

Ein weiterer, wichtiger Gesichtspunkt ist in Anspruch 8 enthalten, der insbesondere für den analogen Abtastmodus gilt, d.h. beim Verfahren mit der Lichtmengenmessung. Bis zum Einstellen auf die Kantensollage und zum Einstellen des tatsächlich gefahrenen Meßbereiches wird mit in Warenbahnlaufrichtung schmalen Flächenbereichen gearbeitet, um für den Kantensuchlauf günstige Signale zu erreichen. Danach wird der Flächenbereich verbreitert, so daß für das Arbeiten im eingeschränkten Meßbereich wiederum optimal starke Signale entstehen. Beim digitalen Abtastmodus ist immer nur der schmalste Flächenbereich vorzuziehen.

Günstig ist ferner die Verfahrensvariante gemäß Anspruch 9, weil je nach Anwendungszweck entweder der digitale oder der analoge Abtastmodus brauchbare Ergebnisse erbringt, wobei durchaus auch eine wahlweise Kombination bzw. Umstellung zwischen den Modi vorzunehmen ist.

Fotoelektronische Fühleinrichtungen der zum Durchführen der eingangs erwähnten bekannten Verfahren hatten den Nachteil einer relativen Ungenauigkeit, einer Benutzungsempfindlichkeit und der Unbrauchbarkeit für die Breitenmessung. Insbesondere fehlte ihnen der große Breitenansprechbereich.

Die fotoelektronisch Fühleinrichtung gemäß Anspruch 10 ermöglicht hingegen eine außerordentlich genaue Ermittlung der Kantenlage, ist verschmutzungsunempfindlich und läßt sich ohne weiteres auch zur Breitenmessung der Warenbahn einsetzen. Die Flächenbereiche der Flüssigkristall-Lichtmodulatoren sind beispielsweise balkenartig strukturiert ähnlich den üblichen Balkenanzeigen und werden so durchgetaktet, daß von allen vorhandenen Flächenbereichen stets einer lichtdurchlässig ist, wobei staffelartig von einem Flächenbereich zum nächsten Flächenbereich übergewechselt wird. Damit entsteht für den lichtsammelnden Empfänger eine wandernde Blende, die einen Lichtstrahl oder ein Lichtbündel auf dem Empfänger linear entlanglaufen läßt. An der Bahnkante tritt ein Signalwechsel ein, den das oder die Fotoelemente am Empfänger zur Signalerzeugung benutzen. Zum Signalzeitpunkt ist jedoch dank der Ansteuerung der Flüssigkristall-Lichtmodulatoren die Position des gerade lichtdurchlässigen Flächenbereichs bekannt, so daß über das die Hell/Dunkel-bzw. Dunkel/Hell-Grenze anzeigende Signal des Fotoelementes gleichzeitig die genaue Lager der Warenbahnkante bekannt ist. Dank der hohen Auflösung der Flüssigkristall-Lichtmodulatoren läßt sich die Warenbahnkantenlage außerordentlich genau abtasten, und zwar auch bei hoher Bahnlaufgeschwindigkeit und relativ starken Verlaufsbewegungen der Bahn. Die Ermittlerschaltung stellt jeweils zum Signalzeitpunkt genau die Lage des aktivierten Flächenbereiches und damit der Warenbahnkante fest. Die Genauigkeit der Fühleinrichtung ist außerordentlich hoch, weil die Auflösung der Flüssigkristall-Lichtmodulatoren sehr hoch sein kann. Es ergeben sich relativ kurze Durchlaufzeiten für den Flächenbereich der Flüssigkristall-Lichtmodulatoren und damit kurze Abtastzyklen, woraus eine sehr hohe Genauigkeit der Abtastung auch bei hohen Bahnlaufgeschwindigkeiten hinsichtlich der eleganten Weiterverarbeitbarkeit der Signale mit Prozessorsteuerungen günstig ist. So spielen Lichtschwankungen keine Rolle, weil ohnedies nur eine minimale Signalschwellenspannung weiterverarbeitet wird. Bei analogem Abtastmodus wird eine höhere Abtastgeschwindigkeit und eine weitergesteigerte Genauigkeit erreicht. Unabhängig vom Abtastmodus kann aufgrund der Kapazität der Flüssigkristall-Lichtmodulatoren eine Breitbandfühleinrichtung geschaffen werden, die einen sehr großen Meßbereich haben kann, aber nicht haben muß, der über den geläufigen Meßbereich von 8 bis 30 mm kantengebundener Fühleinrichtungen hinaus geht, dabei aber trotzdem eine derart große Meßgenauigkeit beibehält. Eine solche Breitbandfühleinrichtung hat auch den Vorteil, daß sie nicht auf die jeweilige Warenbahnbreite eingestellt werden muß, da sie ohnedies alle möglichen Breitenvariationen abdeckt. Der nutzbare Fühlbereich kann sehr groß sein; das würde aber lange Durchlaufzeiten für den aktivierten Flächenbereich und eine unnötige Abtastung eines breiten Bereiches beim Arbeiten mit der Fühleinrichtung erfordern. Über die leichte Ansteuerbarkeit der Flüssigkristall-Lichtmodulatoren, die sowohl Veränderungen in der Durchlaufgeschwindigkeit, in der Anzahl der bei jedem Durchlauf aktivierten Flächenbereiche und auch in der Lage der Flächenbereiche innerhalb der Längenerstrekkung der Flüssigkristall-Lichtmodulatoren verstellbar ist, lassen sich alle in der Praxis zweckmäßigen Verfahrensveränderungen durchführen, d.h. sowohl eine Abtastung über einen sehr breiten Bereich, einen sehr schmalen Bereich, eine Lageveränderung des schmalen Meßbereiches innerhalb der gesamten Fühlbreite und auch eine zyklische Verschiebung des auf eine bestimmte Breite einjustierten Meßbereiches, um die Bahn beim Lauf changieren zu lassen.

Um bei den beengten Platzverhältnissen für die Kantenabtastung einen optimal breiten Fühlbereich mit großer Variationsbreite für den Meßbereich zu erreichen, ist die Ausführungsform gemäß Anspruch 11 von großer Bedeutung. Die Flüssigkristall-Lichtmodulatoren benötigen in Warenbahnlaufrichtung nur eine geringe Breite, während sie sich praktisch für den Fühlbereich in einem Stück erstrekken. Zuverlässige Abtastergebnisse lassen sich bereits erzielen, wenn nur ein Pixel bzw. Lichtpunkt diese Anordnung zum periodischen Durchlauf gebracht wird. Eine größere Lichtmenge pro Zeiteinheit und damit ein ggf. stärkeres Signal läßt sich jedoch erzeugen, wenn der aktivierte Flächenbereich der Anordnung aus mehreren Pixeln besteht. Im digitalen Abtastmodus wird man nur ein Pixel als Anzeige bevorzugen, weil eine geringe Lichtmenge zur Erfassung ausreicht. Je schmaler das schlitzförmige Segnet ist, desto höher ist die Auflösung und die Meßgenauigkeit.

In der Praxis hat sich besonders die Ausführungsform gemäß Anspruch 12 bewährt, wobei balkenförmige bzw. viereckige Segmente die günstigsten Signalwerte erzielen ließen, wenn es sich um einen analogen Abtastmodus handelt. Im digitalen Abtastmodus ist am vorteilhaftesten die Verwendung von schmalen strichförmigen Segmenten.

Bei der Ausführungsform gemäß Anspruch 13 läßt sich über die Ansteuerung der Flüssig-Kristall-Lichtmodulatoren der Meßbereich innerhalb des möglichen Fühlbereiches auf jedes Maß und auf jede Lage begrenzen, wobei durchaus während der Anlaufphase ein anderer Meßbereich als während der Betriebsphase eingestellt werden kann. Auch während des Betriebs sind Umstellungen des Meßbereiches ohne weiteres möglich.

Für das Changieren der Warenbahn ist die Ausführungsform von Anspruch 14 zweckmäßig.

Die Umschaltbarkeit gemäß Anspruch 15 macht die Fühleinrichtung universell für alle vorkommenden Anwendungsfälle brauchbar.

Von besonderer Bedeutung ist die in Anspruch 16 angesprochene Ausführungsform. Körper aus lichtsammelndem Kunststoff haben wie auch ein bandförmiger Parabolspiegel den Vorteil, daß das an der Lichteintrittsfläche eintretende Licht auf seinem Weg zur Lichtaustrittsfläche konzentriert wird, so daß entweder mit nur einem Fotoelement oder mit nur ganz wenigen Fotoelementen sichergestellt ist, daß ein deutliches und exaktes Signal entsteht, sobald an der Hell/Dunkelgrenze die non der Warenbahn und der Lage ihrer Kanten bestimmt wird, eine gravierende Änderung der Lichtintensität auftritt. Der Parabolspiegel benötigt zwar eine bestimmte Tiefe und erfordert deshalb Bauhöhe; er ist jedoch ein einfaches Mittel zum Lichtsammeln über einen verhältnismäßig großen Fühl- oder Meßbereich. Der Körper aus lichtsammlendem Kunststoff kann sehr flach gehalten werden, wobei eine sehr kompakte Bauweise erzielt wird. Um Energieverluste so gering wie möglich zu halten, werden nicht benötigte Teile der Lichtaustrittsfläche abgedeckt oder verspiegelt. Ferner kann die Lichtquelle, die z.B. eine Breitbandleuchte oder eine Leuchtstofflampe ist, durch einen Staubschutz abgedeckt und zur Parallellichterzeugung mit einem Lichtgitter oder einem Linsenband versehen sein, so wie dies üblich ist, um ein gerichtetes Licht zu erhalten. Die Anordnung der Flüssigkristall-Lichtmodulatoren als Abdeckung für die Lichteintrittsfläche des Empfängers verringert die Anfälligkeit gegen Fremdlicht oder unnötige Lichtverluste. Auch ist diese Ausführungsform sehr kompakt.

Insbesondere für den analogen Abtastmodus ist die Ausführungsform von Anspruch 17 wichtig. Aber auch bei digitaler Abtastung kann es zweckmäßig sein, mehrere Fotoelemente, z.B. Fotodioden in Abständen von ca. 50 mm zu verwenden, um Lichtleitverluste im Körper aus lichtsammelndem Kunststoff zu kompensieren. Ist der lichtsammelnde Empfänger ausreichend leistungsfähig, dann reicht bei digitalem Abtastmodus ein Fotoelement, z.B. eine Fotodiode aus, das zweckmäßigerweise in der Mitte des Fühlbereiches bzw. Meßbereiches zu positionieren ist. Im digitalen Modus spielen Lichtleitverluste im lichtsammelnden Element keine so große Rolle.

Um eine Anpassung an unterschiedliche Warenbahnlaufgeschwindigkeiten oder auch die Intensität der Verlaufbewegungen der Bahin zu erhalten, ist die Ausführungsform von Anspruch 18 zweckmäßig. Auf einfache Weise wird hierbei über die Ansteuerung der Flüssigkristall-Lichtmodulatoren die Einjustierung der Fühleinrichtung auf die jeweiligen Gegebenheiten vorgenommen. Beim digitalen Abtastmodus wird man stets die höchste Folgegeschwindigkeit steuern.

Die Ausführungsform gemäß Anspruch 19 ist wichtig, weil die verarbeiteten Signale auf direktem Weg zur Warenbahnlaufkorrektur durch die Korrekturvorrichtung nutzbar sind.

Anhand der Zeichnung werden Ausführungsformen des Erfindungsgegenstandes erläutert.

Es zeigt:
- Fig. 1: einen Teil einer fotoelektronischen Fühleinrichtung, in einer Ansicht in Warenbahnlaufrichtung;
- Fig. 2: perspektivisch einen Teil der Fühleinrichtung von Fig. 1,
- Fig. 3: einen Teil einer anderen Ausführungsform und
- Fig. 4: eine schematische Ansicht einer Bahnbreiten- und Bahnkantenabtastvorrichtung.

In einer fotoelektronischen Fühleinrichtung 1 zur Abtastung einer Kante 3 einer laufenden Warenbahn 2 ist ein rechteckiger Rahmen 4 vorgesehen, der an vertikalen Rahmenprofilen 5 oberseitig der Warenbahn 2 eine Breitbandlichtquelle 6 enthält. Die Lichtquelle 6 sendet einen Lichtvorhang aus Lichtstrahlen 7 aus, der auf einen an einem unteren Rahmenholm 8 angebrachten Empfänger 9 gerichtet ist. Der Empfänger 9 ist hier ein plattenförmiger Körper 11 aus einem fluoreszierendem Kunststoff mit lichtsammelnden Eigenschaften. Dieser lichtsammelnde Kunststoff wird im Merkblatt KL 47310 vom 01.03.1981 der Firma Bayer AG beschrieben. Im Strahlengang von der Lichtquelle 6 zum Empfänger 9 ist eine bandförmige Anordnung von Flüssigkristall-Lichtmodulatoren 10 vor dem Empfänger 9 angeordnet. Zweckmäßigerweise ist diese Anordnung 10 auf die Lichteintrittsfläche des Empfängers 9 aufgelegt.

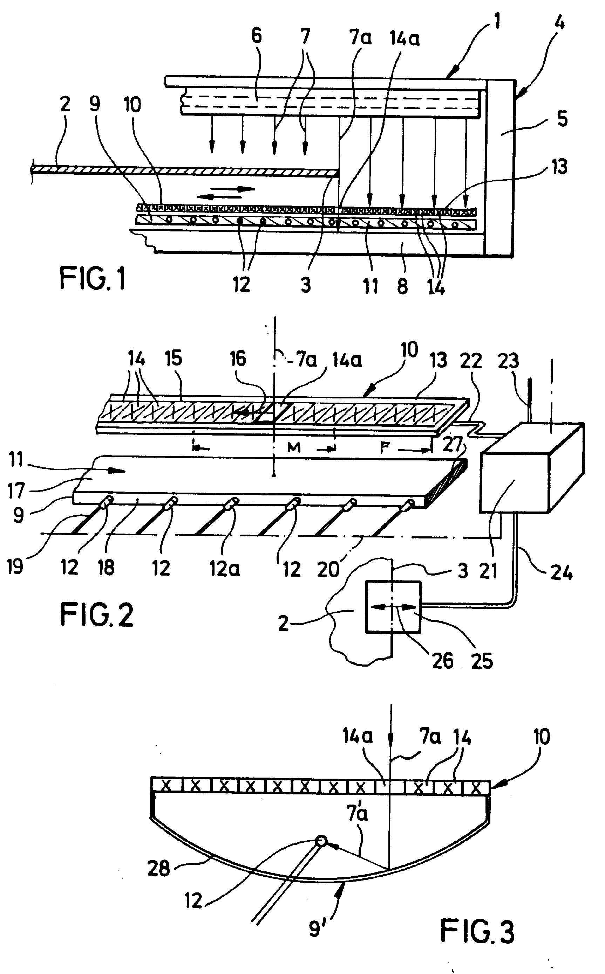

Der Empfänger 9 ist an seiner Lichtaustrittsfläche mit mindestens einem Fotoelement 12, zweckmäßigerweise einer Fotodiode bestückt. Im gezeigten Ausführungsbeispiel sind zur Kompensation von Lichtleitverlusten innerhalb des Empfängers 9 mehrere Fotoelemente 12 in gleichmäßigen Abständen vorgesehen. Die Flüssigkristall-Lichtmodulatoren 10 besitzen ein obenliegendes Sichtfeld und eine Vielzahl von quer zur Warenbahnlaufrichtung ausgerichteten voneinander getrennten Flächenbereichen 14. Durch eine Steuerschaltung (nicht gezeigt) aktiviert, wird der jeweils aktivierte Flächenbereich, z.B. 14a, lichtdurchlässig, während die nicht aktivierten Flächenbereiche lichtundurchlässig bleiben. Auf diese Weise wird bei in Fig. 1 von rechts nach links durchlaufendem aufeinanderfolgendem Aktivieren jedes Flächenbereiches 14 eine durchlaufende Blende für die Lichtstrahlen 7 geschaffen.

Bei einem Durchlauf in Fig. 1 von rechts nach links beaufschlagt der jeweils durch den durchlässigen Flächenbereich 14a hindurchgehende Lichtstrahl 7 den Empfänger 9, bis schließlich beim Flächenbereich 14a letztmalig ein Lichtstrahl 7a zum Empfänger 9 durchkommt. In der weiteren Folge der Durchlaufbewegung der Flüssigkristall-Lichtmodulatoren 10 gelangt kein Lichtstrahl 7 mehr zum Empfänger 9. Auf diese Weise wird mit dem Lichtstrahl 7a von einem der Fotoelemente 12 oder von allen Fotoelementen 12 ein Signal erzeugt. Da die Position des Flächenbereiches 14a zum Signalzeitpunkt bekannt ist, kann auf diese Weise genau die Lage der Kante 3 festgestellt werden. Zweckmäßigerweise werden die Flüssigkristall-Lichtmodulatoren 10 mit hoher Taktfrequenz und immer in derselben Laufrichtung durchgesteuert, so daß permanent genauer Aufschluß über die Lage der Kante 3 erhalten wird. Es könnte natürlich auch eine Laufrichtung in Fig. 1 von links nach rechts gewählt werden, wobei dann an der Kante 3 erstmals Licht auf den Empfänger 9 trifft, so daß dann ein oder mehrere Fotoelemente ein Signal erzeugen, das über die Position des Flächenbereiches 14a die genaue Position der Kante 3 anzeigt.

Die Flüssigkristall-Lichtmodulatoren 10 könnten auch auf der der Lichtquelle 6 zugewandten Seite der Warenbahn 2 angeordnet sein. Es würde ausreichen, nur ein Pixel bzw. einen Lichtpunkt dieser Anordnung 10 durchlaufend zu takten. Zweckmäßigerweise werden aber aus mehreren Pixeln bestehende Segmente benutzt, um eine höhere Lichtleistung durchzubringen.

Es ist ferner denkbar, nach dem Reflexionsprinzip zu arbeiten, d.h. den Empfänger 9 und die Lichtquelle 6 auf derselben Seite der Warenbahn 2 anzuordnen. Es würde dann das Reflexionslicht von den Lichtstrahlen 7 zur Signalerzeugung herangezogen werden.

Fig. 2 verdeutlicht, daß die Flüssigkristall-Lichtmodulatoren 10 an ihrer Oberseite 13 ein Sichtfeld 15 besitzen, das aus nebeneinanderliegenden, balkenförmigen Segmenten, die die Flächenbereiche 14 definieren, besteht. Die Flächenbereiche 14 werden in Richtung eines Pfeiles 16 so durchgetaktet, daß jeweils ein Flächenbereich, z.B. 14a, lichtdurchlässig wird, während die anderen lichtundurchlässig bleiben (durch ein x angedeutet). Es entsteht somit für den Empfänger 9 der Eindruck einer in Richtung des Pfeiles 16 durchlaufenden Blende, die einen Lichtstrahl, z.B. 7a in Meßrichtung durchlaufen läßt. Der Lichtstrahl 7a trifft auf die Lichtauftrittsfläche 17 des lichtsammelnden Körpers 11, wird darin konzentriert und zu dessen Lichtaustrittsfläche 18 transportiert, wo wenigstens ein Fotoelement (12a) oder eine Vielzahl von Fotoelementen 12 angeordnet sind. Die Fotoelemente 12 sind über Signalleitungen 19 an eine Busleitung 20 angeschlossen, die zu einer Steuereinheit 21 führt. In der Steuereinheit 21 ist eine Steuerschaltung (nicht gezeigt) für die Flüssigkristall-Lichtmodulatoren 10 enthalten und mit dieser über Leitungen 22 verbunden. Über eine Leitung 23 ist die Steuereinheit 21 an die Energieversorgung angeschlossen bzw. an weitere, signalverarbeitende Einrichtungen. Eine Ausgangsleitung 24 kann zu einer Bahnlaufkorrekturvorrichtung 25 führen, die die Bahn 2 in Richtung eines Doppelpfeiles 26 und in Abhängigkeit von den von der Steuereinheit 21 erhaltenen Signalen korrigiert.

Ferner ist in Fig. 2 erkennbar, daß der Fühlbereich F der Fühleinrichtung 1 an sich unbegrenzt ist. Mittels der Steuerschaltung in der Steuereinheit 21 läßt sich der tatsächliche Meßbereich M jedoch auf eine beliebige Anzahl von Flächenbereichen 14 der Flüssigkristall-Lichtmodulatoren 10 einschränken. Der Meßbereich kann in jede Richtung verschoben und willkürlich breit gewählt werden, ggfs. genauso breit wie der Fühlbereich F. Nicht genutzte Lichtaustrittsflächen des lichtsammelnden Körpers 11 können abgedeckt oder mit einer Verspiegelung 27 versehen sein, um den Wirkungsgrad der Lichtsammlung und Lichtleitung zur Lichtaustrittsfläche 18 zu erhöhen. Ferner ist denkbar, über die Steuerschaltung (nicht gezeigt) der Flüssigkristall-Lichtmodulatoren 10 die in Warenbahnlaufrichtung gesehene Breite der Flächenbereiche 14 veränderbar zu machen, so daß z.B. in der Anlaufphase mit sehr kleinen Flächenbereichen 14 und über den gesamten Fühlbereich F abgetastet wird (Kantensuchlauf), ehe der Meßbereich M auf die Kantensollage und die zu überwachende Verlaufsbreite eingestellt wird und die gesamte Breite der Flächenbereiche 14 zur Abtastung benutzt wird.

Bei der Ausführungsform gemäß Fig. 3 ist als Empfänger 9' ein bandförmiger Parabolspiegel 28 vorgesehen, in dessen Brennpunkt wenigstens ein Fotoelement 12 angeordnet ist. In der Eintrittsfläche oder im Eintrittsbereich des Empfängers 9' ist wiederum eine bandförmige Anordnung von Flüssigkristall-Lichtmodulatoren 10 vorgesehen, deren Flächenbereiche 14, 14a in der vorerwähnten Weise durchgetaktet werden, so daß ein Lichtstrahl 7a in dem Parabolspiegel 28 eintritt und von dort zum Brennpunkt reflektiert (Reflexionslichtstrahl 7'a). Mit anderen Worten wird über die durch die Länge des Parabolspiegels 28 bestimmte Fühlbreite jeder Lichtstrahl 7a zum Brennpunkt und damit zum Fotoelement 12 reflektiert, der durch den gerade aktivierten Flächenbereich 14a eintritt. An der Kante 3 bleibt der Lichtstrahl dann aus, so daß das Fotoelement 12 ein Signal erzeugt, das mit der Lage des aktivierten Flächenbereiches 14a zum Signalzeitpunkt verknüpft wird, um die genaue Lage der Warenbahnkante 3 festzustellen. Auch hier läßt sich der jeweils gewählte Meßbereich durch Auswahl der Anzahl der zu taktenden Flächenbereiche 14 in der Länge und auch in der Lage innerhalb des Parabolspiegels 28 verstellen.

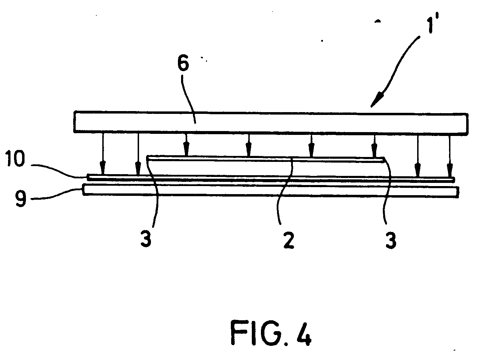

Bei der Fühleinrichtung 1' gemäß Fig. 4 werden nicht nur die beiden Kanten 3 der Warenbahn 2 abgetastet, sondern auch die Bahnbreite insgesamt ermittelt, da sich sowohl die Lichtquelle 6 als auch der Empfänger 9 und die Flüssigkristall-Lichtmodulatoren 10 über die gesamte Warenbahnbreite und über die Kanten 3 hinaus erstrecken. Durch gezielte Ansteuerung der Lichtmodulatoren 10 läßt sich die Warenbahn 2 changierend bewegen, d.h. daß mittels der Bahnkorrektur- oder Steuervorrichtung (25 in Fig. 2) die Bahn zyklisch hin und her bewegt wird, um für bestimmte Aufwickelvorgänge einen vorbestimmten Rhythmus zu erzeugen. Gleichzeitig oder unabhängig davon kann auch die Bahnkantenabtastung und Korrektur des Bahnlaufes vorgenommen werden. Es ist hierbei auch möglich, auf den Flüssigkristall-Lichtmodulatoren 10 gleichzeitig mehrere Flächenbereiche zu takten, d.h. zwei oder drei Flächenbereiche mit gleichbleibendem Abstand anzusteuern, sofern die Steuereinheit dann so aufgebaut ist, daß sie zwischen den zu unterschiedlichen Zeitpunkten entstehenden Signalen zu unterscheiden vermag. Wird der tatsächlich gefahrene Meßbereich auf eine Kante 3 eingestellt, dann kann in der vorerwähnten Weise nur die Randkante abgetastet werden. Der weitere Bereich der Flüssigkristall-Lichtmodulatoren 10 bleibt dann ständig passiv. Es lassen sich dann hohe Taktfrequenzen und eine genaue Abtastung erzielen. Der untere Rahmenholm 8 (Fig. 1) kann als U-förmiges Strangpreßprofil aus Kunststoff oder Aluminium ausgebildet sein, in die eine Einheit, bestehend aus dem Empfänger 9 und der auf diesen aufgelegten oder dort befestigten Anordnung 10 eingeschoben wird. Eine ähnliche Gehäuseeinheit kann auch für die Lichtquelle 6 benutzt werden, wobei zweckmäßigerweise als Staubschutz eine Glasplatte und als Lichtrichtung ein Lichtgitter oder ein Linsenband vor die Lichtquelle 6 eingeschoben werden bzw. in die Lichtquelle 6 eingegliedert sind.

Durch die Begrenzung des tatsächlich gefahrenen Meßbereiches ergibt sich eine steile Fühlerkennlinie und ein sehr empfindliches, genaues und fremdlichtfreies Fühlersignal. Der tatsächlich gefahrene Meßbereich kann wesentlich größer sein als die 8 bis 30 mm der bisher bekannten Fühleinrichtungen. Eine manuelle Einjustierung der Fühleinrichtung auf die jeweilige Bahnbreite entfällt, weil sich die Flüssigkristall-Lichtmodulatoren 10 steuerungsseitig universell verstellen lassen. Bei einem leistungsfähigen Empfänger 9 und bei digitaler Signalauswertung reicht eine in der Mitte angeordnete Fotodiode aus. Bei analoger Signalauswertung wird zweckmäßigerweise eine Reihe von Fotodioden verwendet, z.B. in Abständen von ca. 50 mm.

Die Anordnung von den Flüssigkristall-Lichtmodulatoren 10 über den gesamten Fühlbereich durchzutakten, würde unter Umständen zu verhältnismäßig langen Abtastzyklen führen. Es ist deshalb sinnvoll, nur bei Beginn der Kantenabtastung in einem sogenannten Kantensuchlauf über den gesamten Fühlbereich durchzutakten, bis nach einigen Abtastzyklen die Kantenlage festgestellt ist. Dann wird ein eingeschränkter Meß- bereich in einer schmalen Toleranzzone, z.B. 10 bis 30 mm um die ermittelte Kantenlage eingestellt, indem dann nachfolgend stets in der gleichen Richtung durchgetaktet wird. Der begrenzte Meßbereich läßt sich in der elektronischen Ansteuerung der Flüssigkristall-Lichtmodulatoren vorgeben. Es wäre auch möglich, die Flüssigkristall-Lichtmodulatoren von Hand auf die Kantensolllage zu positionieren, z.B. durch Eingabe von Hand der gewünschten Kantenposition an der elektronischen Steuerung oder mittels eines automatischen Kantensuchlaufes, bei dem die Kantenlage automatisch erfaßt und elektronisch abgespeichert wird. Zu diesem Zweck ist die Steuerung mit einem Mikroprozessor oder zumindest einem Speicher in der Steuerschaltung versehen. Im analogen Abtastmodus wird nach dem Kantensuchlauf von zunächst sehr kleinen Flächenbereichen auf große Flächenbereiche umgeschaltet und analog, mit Lichtmengenmessung, abgetastet. Eine Verlagerung der Kantensollage ist durch Verschieben des Meßbereiches der Flüssigkristall-Lichtmodulatoren möglich. Dies ist innerhalb des gesamten Fühlbereiches möglich. Auch eine zyklische Verschiebung des vorbestimmten Meßbereiches um eine Sollauflage herum ist möglich, um die Bahn changieren zu lassen, was z.B. beim Aufwickeln einer Bahn zweckmäßig ist. Die Signalauswertung kann sowohl digital als auch analog erfolgen. Auch eine wahlweise Umschaltung von einem Modus zum anderen ist denkbar. Der Vorteil der digitalen Signalauswertung ist die Lichtschwankungs-Unempfindlichkeit und die fast unbegrenzte Weiterverarbeitung der Meßdaten mittels Prozessortechnik. Bei analoger Signalauswertung können zwar Störeinflüsse durch Lichtschwankungen auftreten. Die analoge Signalauswertung ist jedoch grundsätzlich schneller und genauer und benötigt weniger elektronischen Aufwand.

## Patentansprüche

1. Verfahren zur Lagefeststellung wenigstens einer Kante einer laufenden Warenbahn innerhalb eines sich quer zur Laufrichtung erstreckenden Meßbereiches, bei dem die Bahn eine auf einen lichtsammelnden Empfänger gerichtete Lichtquelle zum Teil abdeckt und bei dem mittels wenigstens eines am Empfänger angeordneten Fotoelements in Abhängigkeit vom Lichtempfang wenigstens ein Signal erzeugt und dieses bezüglich der Lage der Hell-Dunkelgrenze im Meßbereich ausgewertet wird, dadurch gekennzeichnet, daß im Strahlengang zwischen der Lichtquelle und dem Empfänger wenigstens ein lichtdurchlässiger Flächenbereich einer bis auf diesen Flächenbereich lichtundurchlässigen linearen Anordnung von Flüssigkristall-Lichtmodulatoren schrittweise über den Meßbereich bewegt wird, daß das Signal beim erstmaligen bzw. letztmaligen Auftreten eines für den Empfänger mit dem Flächenbereich wandernden Lichtstrahls auf den Empfänger an der Kante der Warenbahn erzeugt wird, und daß die Lage der Kante anhand der Lage des Flächenbereichs innerhalb des Meßbereiches zum Signalzeitpunkt ermittelt wird.

2. Verfahren nach Anspruch 1, dadurch gekennzeichnet, daß der lichtdurchlässige Flächenbereich erheblich schneller durch den Meßbereich bewegt wird als die Warenbahnkante bei Verlaufbewegungen.

3. Verfahren nach Anspruch 1 oder 2, dadurch gekennzeichnet, daß die Durchlaufbewegung des Flächenbereiches durch schrittweise aufeinanderfolgende elektronische Aktivierung der Flächenbereiche einer Reihe von entlang des Meßbereiches in der linearen Anordnung von Flüssigkristall-Lichtmodulatoren angeordneter Flächenbereiche simuliert wird.

4. Verfahren nach Anspruch 1, dadurch gekennzeichnet, daß die Flächenbereiche in taktweisen Durchläufen in jeweils der gleichen Richtung aktiviert werden.

5. Verfahren nach Anspruch 1, dadurch gekennzeichnet, daß innerhalb des Fühlbereiches ein Meßbereich begrenzt wird, und daß der Flächenbereich innerhalb des Fühlbereiches ausschließlich über den Meßbereich bewegt wird.

6. Verfahren nach Anspruch 5, dadurch gekennzeichnet, daß der Meßbereich zum Changieren des Bahnlaufes zyklisch innerhalb des Fühlbereiches hin- und herverstellt wird.

7. Verfahren nach mindestens einem der Ansprüche 1 bis 6, dadurch gekennzeichnet, daß zum anfänglichen Kantensuchlauf der Flächenbereich der linearen Anordnung von Flüssigkristall-Lichtmodulatoren über den ganzen Fühlbereich durchgetaktet und daß nach Feststellen der Lage der Kante innerhalb des Fühlbereiches auf die Sollage der Kante bezogenen, engeren Meßbereich umgestellt wird.

8. Verfahren nach mindestens einem der Ansprüche 1 bis 7, dadurch gekennzeichnet, daß zumindest die in Warenbahnlaufrichtung gesehene Breite der Flächenbereiche der linearen Anordnung von Flüssigkristall-Lichtmodulatoren verstellbar ist, und daß die Flächenbereiche von einer schmalen Einstellung beim anfänglichen Kantensuchlauf auf eine breite Einstellung für den in der Länge beschränkten Meßbereich eingestellt werden.

9. Verfahren nach mindestens einem der Ansprüche 1 bis 8, dadurch gekennzeichnet, daß die Signalauswertung wahlweise digital oder analog erfolgt und daß im digitalen Abtastmodus die vom Fotoelement erzeugten Signale in Form von eine minimale Spannungsschwelle übersteigenden Spannungswert gebildet, hingegen im analogen Abtastmodus in Form von die gemessene Lichtmenge repräsentierenden Spannungswerten gebildet werden.

10. Fotoelektronische Fühleinrichtung, insbesondere zur Ermittlung der Kantenlage einer laufenden Bahn, mit wenigstens einer einen quer zur Bahnlaufrichtung liegenden und zum Teil von der Warenbahn abgedeckten Fühlbereich beleuchtenden Lichtquelle und mit wenigstens einem darauf ausgerichteten, lichtsammelnden Empfängerteil, der sich über den Fühlbereich erstreckt und wenigstens eine Lichteintrittsfläche und wenigstens eine Lichtaustrittsfläche besitzt, an der wenigstens ein durch Licht zur Signalerzeugung aktivierbares Fotoelement angeordnet ist, dadurch gekennzeichnet, daß zwischen der Lichtquelle (6) und dem Empfängerteil (9, 9') eine bandförmige Anordnung von Flüssigkristall-Lichtmodulatoren (10) angeordnet ist, daß die Flüssigkristall-Lichtmodulatoren (10) in Meßrichtung mindestens einer Reihe von aus einem lichtundurchlässigen Normalzustand elektronisch in einen lichtdurchlässigen Zustand aktivierbarer Flächenbereiche (14, 14a) aufweisen, daß die Flächenbereiche (14, 14a) zur sequentiellen Aktivierung an eine Steuerschaltung (21) angeschlossen sind, und daß die Steuerschaltung (21) mit einer Ermittlerschaltung verbunden ist, in der mit einem Signal des Fotoelements (12, 12a) die Lage eines aktivierten Flächenbereiches (14a) innerhalb des Meßbereiches (M) ermittelbar ist.

11. Fühleinrichtung nach Anspruch 10, dadurch gekennzeichnet, daß die Anordnung von Flüssigkristall-Lichtmodulatoren (10) bandförmig ist und daß jeder aktivierbare Flächenbereich (14, 14a) zumindest ein Pixel der Flüssigkristall-Modulatoren (10) ist.

12. Fühleinrichtung nach Anspruch 11, dadurch gekennzeichnet, daß die Flächenbereiche (14) in einem Sichtfeld (13) der Flüssigkristall-Lichtmodulatoren (10) nebeneinanderliegende balkenförmige, viereckige oder runde Segmente sind.

13. Fühleinrichtung nach mindestens einem der Ansprüche 10 bis 12, dadurch gekennzeichnet, daß der Meßbereich (M) innerhalb des Fühlbereiches (F) durch Begrenzung der Anzahl der zu aktivierenden Flächenbereiche (14, 14a) einstellbar ist.

14. Fühleinrichtung nach mindestens einem der Ansprüche 10 bis 13, dadurch gekennzeichnet, daß die Lage des Meßbereiches (M) innerhalb des Fühlbereiches (F) vorzugsweise zyklisch verstellbar ist.

15. Fühleinrichtung nach mindestens einem der Ansprüche 10 bis 14, dadurch gekennzeichnet, daß sie wahlweise zwischen digitalem und analogem Abtastmodus umschaltbar ist.

16. Fühleinrichtung nach Anspruch 10, dadurch gekennzeichnet, daß die Lichtquelle (6) eine Breitbandlichtquelle an einer Warenbahnseite und der Empfänger ein Körper (11) aus fluoreszierend eingefärbtem, lichtsammelndem Kunststoff oder ein bandförmiger Parabolspiegel (28) auf der anderen Warenbahnseite ist, und daß die Flüssigkristall-Lichtmodulatoren (10) auf den Körper (9) oder die Eintrittsöffnung des Parabolspiegels (28) aufgelegt sind.

17. Fühleinrichtung nach einem der Ansprüche 10 bis 16, dadurch gekennzeichnet, daß an der Lichtaustrittsfläche (18) des Körpers (11) mehrere mit Abständen verteilte Fotoelemente (12, 12a) angeordnet sind.

18. Fühleinrichtung nach einem der Ansprüche 10 bis 17, dadurch gekennzeichnet, daß die in Meßrichtung gesehene Folgegeschwindigkeit und/oder die Taktzahl der Aktivierung der Flächenbereiche (14, 14a) verstellbar sind.

19. Fühleinrichtung nach mindestens einem der Ansprüche 10 bis 18, dadurch gekennzeichnet, daß die Ermittlerschaltung signalübertragend an eine Bahnlaufkorrekturvorrichtung (25) angeschlossen ist.

## Claims

1. Method for determining the position of at least one edge of a moving material web within a measuring region extending at right angles to the direction of movement, in which the web partially covers a light source directed onto a light-collecting receiver, and in which at least one photoelement arranged on the receiver is used to generate at least one signal as a function of the received light and said signal is evaluated in relation to the position of the bright/dark boundary in the measuring region, characterised in that in the beam path between the light source and the receiver at least one light-transmitting surface region of a linear arrangement of liquid crystal light modulators which is light-tight up to said surface region is moved stepwise over the measuring region, in that the signal is generated on the first or last occasion when a light beam for the receiver which travels with the surface region arrives on the receiver at the edge of the material web, and in that the position of the edge is determined with the aid of the position of the surface region within the measuring region at the instant of a signal.

2. Method according to Claim 1, characterised in that the light-transmitting surface region is moved substantially more quickly through the measuring region than the edge of the material web in the case of misrunning movements.

3. Method according to Claim 1 or 2, characterised in that the traversing movement of the surface region is simulated by electronic activation, performed sequentially in steps, of the surface regions of a row of surface regions arranged along the measuring region in the linear arrangement of liquid crystal light modulators.

4. Method according to Claim 1, characterised in that the surface regions are activated in the same direction in each case in cyclic traverses.

5. Method according to Claim 1, characterised in that a measuring region is bounded within the sensing region, and in that the surface region is moved within the sensing region exclusively over the measuring region.

6. Method according to Claim 5, characterised in that the measuring region is adjusted to and fro cyclically within the sensing region in order to change the movement of the web.

7. Method according to at least one of Claims 1 to 6, characterised in that for the purpose of the initial edge search run the surface region of the linear arrangement of liquid crystal light modulators is timed over the entire sensing region, and in that after determining the position of the edge within the sensing region a switch is made to a measuring region which is narrower with reference to the desired position of the edge.

8. Method according to at least one of Claims 1 to 7, characterised in that it is possible to adjust at least the width, seen in the direction of motion of the material web, of the surface region of the linear arrangement of liquid crystal light modulators, and in that the surface regions can be set from a narrow setting in the initial edge search run to a wide setting for the measuring region, which is limited in length.

9. Method according to at least one of Claims 1 to 8, characterised in that the signal evaluation is optionally performed in a digital or analog fashion, and in that the signals generated by the photoelement are given the form of voltage values which exceed a minimum voltage threshold, in the digital scanning mode, but the form of voltage values representing the measured light quantity, in the analog scanning mode.

10. Photoelectronic sensor device, in particular for determining the edge position of a moving web, having at least one light source which illuminates a sensing region situated at right angles to the direction of movement of the web and partially covered by the material web, and having at least one light-collecting receiver path which is directed onto said light source, extends over the sensing region, and has at least one light entry surface and at least one light exit surface, on which there is arranged at least one photoelement which can be activated by light to generate signals, characterised in that a band-shaped arrangement of liquid crystal light modulators (10) is arranged between the light source (6) and the receiver part (9, 9'), in that the liquid crystal light modulators (10) have in the direction of measurement at least one row of surface regions (14, 14a) which can be electronically activated from a light-tight normal state into a light-transmitting state, in that the surface regions (14, 14a) are connected for the purpose of sequential activation to a control circuit transmitting state, in that the surface regions (14, 14a) are connected for the purpose of sequential activation to a control circuit (21), and in that the control circuit (21) is connected to a determining circuit in which the position of an activated surface region (14a) can be determined within the measuring region (M) by means of a signal of the photoelement (12, 12a).

11. Sensor device according to Claim 10, characterised in that the arrangement of liquid crystal light modulators (10) is band-shaped, and in that each activatable surface region (14, 14a) is at least one pixel of the liquid crystal modulators (10).

12. Sensor device according to Claim 11, characterised in that the surface regions (14) are bar-shaped, rectangular or round segments juxtaposed in a field of view (13) of the liquid crystal light modulators (10).

13. Sensor device according to at least one of Claims 10 to 12, characterised in that the measuring region (M) can be set within the sensing region (F) by limiting the number of the surface regions (14, 14a) to be activated.

14. Sensor device according to at least one of Claims 10 to 13, characterised in that the position of the measuring region (M) within the sensing region (F) can preferably be adjusted cyclically.

15. Sensor device according to at least one of Claims 10 to 14, characterised in that it can optionally be switched over between a digital and an analog scanning mode.

16. Sensor device according to Claim 10, characterised in that the light source (6) is a broad band light source on one side of the material web and the receiver is a member (11), made from fluorescing, dyed, light-collecting plastic, or a band-shaped parabolic mirror (28) on the other side of the material web, and in that the liquid crystal light modulators (10) are mounted on the member (9) or the entrance aperture of the parabolic mirror (28).

17. Sensor device according to one of Claims 10 to 16, characterised in that a plurality of photoelements (12, 12a) distributed with spacings are arranged on the light exit surface (18) of the member (11).

18. Sensor device according to one of Claims 10 to 17, characterised in that it is possible to adjust the repetition rate, seen in the direction of measurement, and/or the number of clock pulses of the activation of the surface regions (14, 14a).

19. Sensor device according to at least one of Claims 10 to 18, characterised in that the determining circuit is connected in a signal-transmitting fashion to a device (25) for correcting the movement of the web.

## Revendications

1. Procédé pour déterminer la position d'un bord au moins d'un produit en bande continu à l'intérieur d'une zone de mesure transversale au sens de défilement, dans lequel la bande couvre en partie une source lumineuse, dirigée sur un récepteur collecteur de lumière, et dans lequel un signal au moins est généré au moyen d'une cellule photoélectrique au moins, disposée sur le récepteur, en fonction de la réception de lumière, et analysé par rapport à la position de la limite brillante/obscure dans la zone de mesure, caractérisé en ce que, dans la trajectoire des rayons entre la source lumineuse et le récepteur, une zone superficielle transparente au moins d'un agencement linéaire de modulateurs de lumière à cristaux liquides, opaque à l'exception de cette zone superficielle, est déplacée progressivement sur la zone de mesure, en ce que le signal est généré sur le bord du produit en bande, lors du premier et/ou dernier impact d'un rayon lumineux sur le récepteur, qui se déplace pour ce dernier avec la zone superficielle, et en ce que la position du bord est déterminée à l'instant du signal, à l'aide de la position de la zone superficielle à l'intérieur de la zone de mesure.

2. Procédé suivant la revendication 1, caractérisé en ce que la zone superficielle transparente est déplacée beaucoup plus vite au travers de la zone de mesure que le bord du produit en bande, lors de mouvements de déport.

3. Procédé suivant l'une des revendications 1 et 2, caractérisé en ce que le mouvement de passage de la zone superficielle est simulé par une activation électronique, successive et progressive, des zones superficielles d'une série de zones superficielles, disposées le long de la zone de mesure, dans l'agencement linéaire de modulateurs de lumière à cristaux liquides.

4. Procédé suivant la revendication 1, caractérisé en ce que les zones superficielles sont activées par passes cadencées, dans la même direction.

5. Procédé suivant la revendication 1, caractérisé en ce qu'une zone de mesure est limitée à l'intérieur de la zone de détection, et en ce que la zone superficielle, à l'intérieur de la zone de détection, est exclusivement déplacée sur la zone de mesure.

6. Procédé suivant la revendication 5, caractérisé en ce que la zone de mesure est animée d'un mouvement cyclique de va-et-vient à l'intérieur de la zone de détection, pour faire changer le défilement de la bande.

7. Procédé suivant l'une au moins des revendications 1 à 6, caractérisé en ce que, pour la recherche initiale du bord, la zone superficielle de l'agencement linéaire de modulateurs de lumière à cristaux liquides est cadencée sur la totalité de la zone de détection, et en ce que, après la détermination de la position du bord, une zone de mesure plus étroite, rapportée à la position de consigne du bord, est réglée à l'intérieur de la zone de détection.

8. Procédé suivant l'une au moins des revendications 1 à 7, caractérisé en ce que la largeur du moins, vue dans le sens de défilement du produit en bande, des zones superficielles de l'agencement linéaire de modulateurs de lumière à cristaux liquides est ajustable, et en ce que les zones superficielles sont réglées d'un réglage étroit, lors de la recherche initiale du bord, à un réglage large pour la zone de mesure limitée en longueur.

9. Procédé suivant l'une au moins des revendications 1 à 8, caractérisé en ce que l'analyse des signaux peut être numérique ou analogique, et en ce que, dans le mode d'analyse numérique, les signaux générés par la cellule photoélectrique sont formés par une valeur de tension, dépassant une tension de seuil minimale, alors qu'ils sont formés, dans le mode d'analyse analogique, par des valeurs de tension représentant la quantité de lumière mesurée.

10. Capteur photoélectrique, pour la détermination de la position du bord d'une bande continue, notamment, avec une source lumineuse au moins, éclairant une zone de détection située à la transversale du sens de défilement de la bande et en partie couverte par le produit en bande, et avec un récepteur au moins collecteur de lumière, orienté sur cette source, qui s'étend sur la zone de détection et présente une surface d'incidence, au moins, et une surface d'émergence, au moins, sur laquelle est disposée une cellule photoélectrique au moins, pouvant être activée par la lumière pour la génération du signal, caractérisé en ce qu'un agencement en forme de bande de modulateurs de lumière à cristaux liquides (10) est disposé entre la source lumineuse (6) et le récepteur (9, 9'), en ce que les modulateurs de lumière à cristaux liquides (10) présentent, dans le sens de mesure, une série au moins de zones superficielles (14, 14a), pouvant être activées électroniquement d'un état normal opaque à un état transparent, en ce que les zones superficielles (14, 14a) sont raccordées à un circuit de commande (21) pour l'activation séquentielle, et en ce que le circuit de commande (21) est relié à un circuit déterminateur, dans lequel la position d'une zone superficielle activée (14a), à l'intérieur de la zone de mesure (M), peut être déterminée par un signal de la cellule photoélectrique (12, 12a).

11. Capteur suivant la revendication 10, caractérisé en ce que l'agencement de modulateurs de lumière à cristaux liquides (10) est en forme de bande, et en ce que chaque zone superficielle (14, 14a), pouvant être activée, est au moins un pixel des modulateurs à cristaux liquides (10).

12. Capteur suivant la revendication 11, caractérisé en ce que les zones superficielles (14) sont des segments en forme de barres, quadrangulaires ou circulaires, juxtaposés dans un champ visuel (13) des modulateurs de lumière à cristaux liquides (10).

13. Capteur suivant l'une au moins des revendications 10 à 12, caractérisé en ce que la zone de mesure (M) est réglable à l'intérieur de la zone de détection (F), par la limitation du nombre des zones superficielles (14, 14a) d'activation.

14. Capteur suivant l'une au moins des revendications 10 à 13, caractérisé par une possibilité de réglage cyclique, de préférence, de la position de la zone de mesure (M) à l'intérieur de la zone de détection (F).

15. Capteur suivant l'une au moins des revendications 10 à 14, caractérisé par une possibilité de commutation sélective entre un mode d'analyse numérique et analogique.

16. Capteur suivant la revendication 10, caractérisé en ce que la source lumineuse (6) et une source de lumière à large bande, sur un côté du produit en bande, le récepteur étant un corps (11) en matière plastique teintée fluorescente, collectrice de lumière, ou un miroir parabolique en forme de ruban (28), sur l'autre côté du produit en bande, et en ce que les modulateurs de lumière à cristaux liquides (10) sont placés sur le corps (9) ou sur l'ouverture d'entrée du miroir parabolique (28).

17. Capteur suivant l'une quelconque des revendications 10 à 16, caractérisé en ce que plusieurs cellules photoélectriques (12, 12a), réparties à distance, sont disposées sur la surface d'émergence (18) du corps (11).

18. Capteur suivant l'une quelconque des revendications 10 à 17, caractérisé en ce que la vitesse des séquences, vue dans le sens de mesure, et/ou la cadence d'activation des zones superficielles (14, 14a), sont ajustables.

19. Capteur suivant l'une au moins des revendications 10 à 18, caractérisé en ce que le circuit déterminateur est raccordé à un dispositif de correction de défilement de la bande (25), auquel il transmet les signaux.
